# EUROPEAN PATENT APPLICATION

(11) **EP 3 059 831 A1**
(43) Date of publication of application: **24.08.2016**
(21) Application number: 15184627.6
(22) Date of filing: 10.09.2015
(51) Int. Cl.: H02J 7/00, H02J 7/14

(54) **SECONDARY LITHIUM BATTERY FOR VEHICLE USE**

(30) Priority: 17.02.2015 TW 104105503
(71) Applicant: Reduce Carbon Energy Develop Co., Ltd., New Taipei City 238 (TW)
(72) Inventor: Chen, Fu-Chieh, 238 New Taipei City (TW)
(74) Representative: Brown, Michael Stanley

(57) **Abstract**

A secondary lithium battery for vehicle use composed of a storage battery unit, a charge/discharge relay, a microprocessor, a control module, and an electrode terminal module. The control module is respectively electrically connected to the storage battery unit, the microprocessor, and the electrode terminal module. The microprocessor controls the control module, thereby enabling the the storage battery unit to discharge electricity to the electric equipment. The second lithium battery is additionally configured with the control module to form a unidirectional circuit that only enables discharging, a microprocessor which enables the charge/discharge relay to execute protection against overcharging and overdischarging, whereupon the control module is activated to prevent a power shortage phenomenon from occurring while the motor vehicle is traveling.

## Description

### BACKGROUND OF THE INVENTION

### (a) Field of the Invention

The present invention relates to a starter battery for motor vehicles, and more particularly to a secondary lithium battery for vehicle use.

### (b) Description of the Prior Art

The electric power supply system of automobile or motorcycle vehicles is primarily assembled from an electric generator, an AC/DC (alternating current/direct current) conversion module, and a starter battery. The input end of the AC/DC conversion module is electrically connected to the electric generator, and the output end of the AC/DC conversion module is coupled to the electrode terminals of the starter battery. The electric equipment of a motor vehicle uses electric leads to couple to the electrode terminals of the starter battery.

The electric generator operates to generate alternating current, and the AC/DC conversion module converts the alternating current into direct current, which is then able to supply electric power to the starter battery for storage and the electric power requirements of the electric equipment. The starter battery primarily supplies the starter motor of a motor vehicle with the electric power required to operate, and uses operation of the starter motor to start up and activate the engine of the motor vehicle, whereupon starting of the engine activates the electric generator.

Following the development of lithium battery technology, a secondary lithium battery was gradually adopted as the starter battery for motor vehicles. A secondary lithium battery is primarily provided with a storage battery unit, a charging circuit, a discharging circuit, and a relay, wherein the storage battery unit is provided with a plurality of battery cells, and the battery cells are connected in series/parallel to form the storage battery unit. The storage battery unit, the charging circuit, and the discharging circuit are respectively electrically connected to the relay, and the charging circuit and the discharging circuit respectively control opening/closing of the charge/discharge relay, thereby enabling the storage battery unit to charge/discharge.

While charging the storage battery unit, the charging circuit balances charging of each battery cell to avoid overcharging any one of the battery cells and to prevent danger from occurring. Moreover, when the voltage of the storage battery unit is raised to a specified high voltage value, the charging circuit controls disconnection of the relay, thereupon discontinuing charging of the storage battery unit to achieve the function of protection against overcharging. When the storage battery unit is discharging, and when the voltage of the storage battery unit falls to a specified low voltage value, then the discharging circuit controls disconnection of the relay, thereupon discontinuing external discharge of the storage battery unit, thus preventing the storage battery unit from overdischarging, which would affect the serviceable life of the storage battery unit, thereby achieving the function of protection against overdischarging.

In the condition whereby the engine is not yet running, the relay is open, and the storage battery unit supplies electric power to electric equipment such as the electronic control unit of a motor vehicle, the car burglar alarm, and the like. When the engine is started, the starter battery supplies electric power to the starter motor, whereupon the engine starts, which then activates and starts an electric generator to generate electricity. After which, because the voltage of the electric generator is greater than the voltage of the storage battery unit, thus, there is an electric potential difference between the electric generator and the storage battery unit, which enables the electric generator to supply power to the electric equipment, and the storage battery unit does not discharge. However, before the electric generator starts and generates electricity, the storage battery unit supplies electric power to the electric equipment and the starter motor, which causes the electric power storage of the storage battery unit to decrease, thus, the electric generator supplies power to charge the storage battery unit to enable the accumulated electric power of the storage battery unit to return to a fully charged state.

When starting the engine that is shut down, the secondary lithium battery supplies the starter motor with the electric power required to run. After the engine starts, the electric generator is activated and supplies electric power to the electric equipment, whereupon the secondary lithium battery stops supplying power to the electric equipment, thus, the electric power storage of the storage battery unit decreases and the engine activates and drives the electric generator to generate electricity. The electric generator then supplies electric power to the electric equipment and also charges the secondary lithium battery. When the secondary lithium battery has returned to a fully charged state, the relay is disconnected and the storage battery unit discontinues charging/discharging.

However, in actual practice it is found that under certain conditions, when the secondary lithium battery has returned to a fully charged state, the relay is disconnected, and when the storage battery unit discontinues charging/discharging, then the AC/DC conversion module also disconnects external discharging, at which time, although the electric generator continues to run, the electric equipment is unable to effectively obtain electric power supplied by the electric generator. After a period of time, because of the electric requirements of the electric equipment, the AC/DC conversion module is thus reconnected and returns to external discharging, whereupon the electric equipment once again obtains power supplied by the electric generator. Even if the disconnection time of the aforementioned AC/DC conversion module is extremely short, a temporary power shortage phenomenon still occurs in the motor vehicle while traveling, which easily results in a detrimental effect on the serviceable life of the electric equipment. Moreover, throughout the duration of the temporary power shortage, power steering that relies on electric power to operate cannot be effectively operated, which easily becomes a safety hazard while the motor vehicle is traveling.

### SUMMARY OF THE INVENTION

The main object of the present invention lies in providing a secondary lithium battery for vehicle use, which is used to serve as a starter battery for a motor vehicle, wherein, when charging of a storage battery unit is completed, a control module is used to open a unidirectional circuit to supply power to electric equipment of the motor vehicle.

The present invention provides a secondary lithium battery for vehicle use, wherein the secondary lithium battery for vehicle use is a starter battery, which comprises a storage battery unit, a charge/discharge relay, a microprocessor, a control module, and an electrode terminal module. The storage battery unit primarily comprises a plurality of series/parallel connected battery cells, and the electrode terminal module comprises a positive terminal and a negative terminal, thereby enabling electric power to pass through the electrode terminal module and enter/exit the secondary lithium battery. The charge/discharge relay is electrically connected to the storage battery unit, and the charge/discharge relay is further electrically connected to the electrode terminal module. An AC/DC (alternating current/direct current) conversion module of the electric generator of the motor vehicle and the electric equipment of the motor vehicle are respectively coupled to the electrode terminal module, thereby enabling controlling charging/discharging of the storage battery unit. The microprocessor is respectively electrically connected to the storage battery unit and to the charge/discharge relay. The microprocessor comprises a charging circuit and a discharging circuit, and is used to detect the voltage of the storage battery unit, as well as controlling activation of the charge/discharge relay.

The control module is respectively electrically connected to the storage battery unit and the microprocessor, and the control module is further electrically connected to the electrode terminal module. The microprocessor controls opening and closing the control module, thereby enabling the control module to control the storage battery unit to discharge electricity to the electric equipment.

When the storage battery unit is charging, the control module is disconnected, and the microprocessor detects the voltage of the storage battery unit. When the storage battery unit is fully charged, the microprocessor controls disconnection of the charge/discharge relay, and opens the control module, thereby enabling the storage battery unit to use the control module to discharge electricity to the electric equipment.

After the charge/discharge relay is disconnected and the control module is opened, the microprocessor detects the voltage of the storage battery unit. If the voltage of the storage battery unit is higher than or equal to a third voltage value, then disconnection of the charge/discharge relay is maintained, and the control module remains opened, thus disabling the storage battery unit from being charged. If the voltage of the storage battery unit is lower than the third voltage value, then the microprocessor controls opening the charge/discharge relay, and also disconnects the control module, thus the storage battery unit uses the charge/discharge relay to supply power to the electric equipment.

When the charge/discharge relay is executing protection against overcharging by disconnecting, opening of the control module is used to enable the storage battery unit to supply power to the electric equipment, thereby preventing a power shortage phenomenon from occurring while the motor vehicle is traveling. Accordingly, the reliability of continuous operation of the electric equipment is increased, and safety of the motor vehicle while traveling is ensured.

To enable a further understanding of said objectives and the technological methods of the invention herein, a brief description of the drawings is provided below followed by a detailed description of the preferred embodiments.

### BRIEF DESCRIPTION OF THE DRAWINGS

FIG. 1 is a circuit block diagram of an electric generator and electric equipment of an embodiment of the present invention.
FIG. 2 is an operational flow diagram of the embodiment of the present invention.

### DETAILED DESCRIPTION OF THE PREFERRED EMBODIMENTS

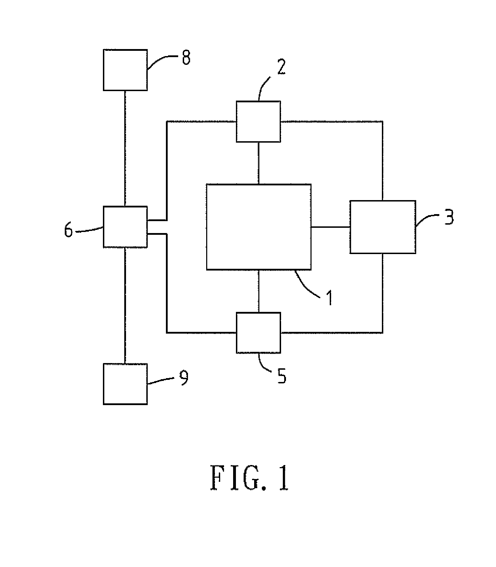

Referring to FIG. 1, which shows an embodiment of a secondary lithium battery for vehicle use of the present invention comprising a storage battery unit (1), a charge/discharge relay (2), a microprocessor (3), a control module (5), and an electrode terminal module (6). Wherein the aforementioned secondary lithium battery for vehicle use is a starter battery for a motor vehicle, and the storage battery unit (1) primarily comprises a plurality of battery cells, and the battery cells are connected in series/parallel to form the storage battery unit (1). The electrode terminal module (6) comprises a positive terminal and a negative terminal, thereby enabling electric power to pass through the electrode terminal module (6) and enter/exit the secondary lithium battery. The charge/discharge relay (2) is electrically connected to the storage battery unit (1), and the charge/discharge relay (2) is further electrically connected to the electrode terminal module (6). An AC/DC conversion module of an electric generator (8) of the motor vehicle and electric equipment (9) of the motor vehicle are respectively coupled to the electrode terminal module (6), thereby enabling controlling charging/discharging of the storage battery unit (1). The microprocessor (3) is respectively electrically connected to the storage battery unit (1) and the charge/discharge relay (2). The microprocessor (3) comprises a charging circuit and a discharging circuit, and is used to detect the voltage of the storage battery unit (1), as well as controlling activation of the charge/discharge relay (2), thereby preventing the storage battery unit (1) from overcharging/overdischarging, and thus protecting the storage battery unit (1).

The control module (5) can choose to use a relay or a metal oxide semiconductor field effect transistor, generally known as a MOSFET. The control module (5) is respectively electrically connected to the storage battery unit (1) and the electrode terminal module (6) to form an unidirectional circuit, and the control module (5) is further electrically connected to the microprocessor (3). The microprocessor (3) controls opening/closing of the control module (5), thereby enabling the control module (5) to control the storage battery unit (1) to discharge electricity the electric equipment (9) using the aforementioned unidirectional circuit.

Under general conditions, the charge/discharge relay (2) is in an open state, and the control module (5) is in a disconnected state, thereby enabling the secondary lithium battery for vehicle use to supply electric power to the electric equipment (9). When it is desired to start up the engine of the motor vehicle from a shut down state, the secondary lithium battery for vehicle use supplies power to activate the starter motor of the motor vehicle. After the engine starts, the engine activates the electric generator (8) to generate electricity, however, because the voltage of the electric generator (8) is higher than the voltage of the secondary lithium battery for vehicle use, thus, there is an electric potential difference between the electric generator (8) and the secondary lithium battery for vehicle use, which enables the electric generator (8) to supply electric power to the electric equipment (9). Although the charge/discharge relay (2) remains open, however, the secondary lithium battery for vehicle use does not supply electric power to the electric equipment (9). When the engine is started, the secondary lithium battery for vehicle use supplies power to activate and start the engine, thereby causing the electric power storage of the secondary lithium battery for vehicle use to decrease. After the electric generator (8) has been activated, electric power is supplied to enable charging of the secondary lithium battery for vehicle use.

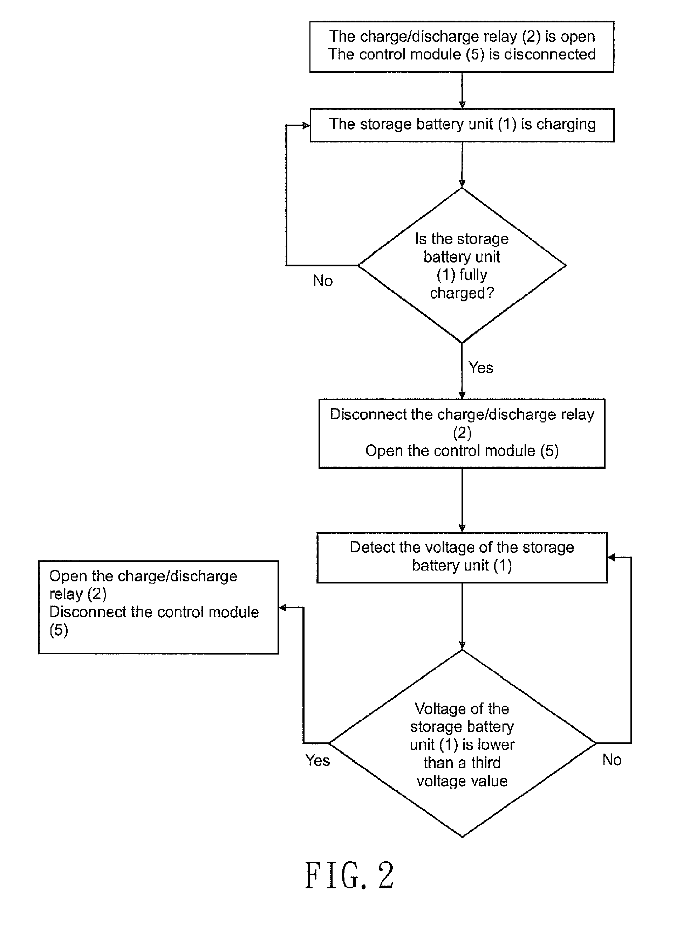

Referring to FIG. 1 and FIG. 2, when the electric generator (8) is charging the storage battery unit (1) of the secondary lithium battery for vehicle use, the control module (5) remains in a disconnected state, and the microprocessor (3) detects the voltage of the storage battery unit (1). Accordingly, the microprocessor (3) detects whether or not the voltage of each battery cell of the storage battery unit (1) is higher than a first voltage value and whether or not the combined voltage of the storage battery unit (1) is higher than a second voltage value, the results of which are used to determine whether or not the storage battery unit (1) is fully charged. Accordingly, the first voltage value is determined from the saturated voltage of each battery cell, and the second voltage value is determined from the saturated voltage of each battery cell. If the voltage of any one of the battery cells is not higher than the first voltage value, or the combined voltage of the storage battery unit (1) is not higher than the second voltage value, then the charge/discharge relay (2) remains open and continues to charge the storage battery unit (1). The first voltage value can be, but is not limited to, 3.65V, and the second voltage value can be, but is not limited to14.6V.

When the storage battery unit (1) is charging, if the voltage of each of the battery cells is higher than the first voltage value and the combined voltage of the storage battery unit (1) is higher than the second voltage value, then it indicates that the storage battery unit (1) is fully charged, and the microprocessor (3) controls disconnection of the charge/discharge relay (2) as well as opening of the control module (5). Disconnection of the charge/discharge relay (2) is able to prevent overcharging the storage battery unit (1), thereby achieving the function of protection against overcharging. And opening the control module (5) enables the storage battery unit (1) to use the control module (5) to discharge electricity to the electric equipment (9). Accordingly, even though the AC/DC conversion module of the the electric generator (8) is disconnected from external discharging, the electric equipment (9) is able to receive electric power supplied by the secondary lithium battery for vehicle use, thereby preventing power shortage phenomenon from occurring while the motor vehicle is traveling, and increasing the reliability of sustained operation of the electric equipment (9), as well as ensuring the safety of the motor vehicle while traveling.

When charging of the aforementioned the storage battery unit (1) is complete, the microprocessor (3) controls disconnection of the charge/discharge relay (2) to execute protection against overcharging. Moreover, after opening the control module (5), the microprocessor (3) detects the voltage of the storage battery unit (1), and if the voltage of the storage battery unit (1) is higher than or equal to a preset third voltage value, then the charge/discharge relay (2) remains disconnected and the control module (5) remains open, which prevents the storage battery unit (1) from being charged, thus starting to charge the storage battery unit (1) is avoided and the storage battery unit (1) is continuously protected from being overcharged. If the voltage of the storage battery unit (1) is lower than the third voltage value, then the microprocessor (3) controls opening the charge/discharge relay (2), and also causes disconnection of the control module (5), which enables electric power to pass through the charge/discharge relay (2) and enter/exit the storage battery unit (1), thus the storage battery unit (1) can supply power to the electric equipment (9) through the charge/discharge relay (2), and the electric generator (8) can charge the storage battery unit (1) through the charge/discharge relay (2). The aforementioned third voltage value is lower than the aforementioned second voltage value, moreover, the third voltage value can be set according to the saturated charge capacity of the storage battery unit (1) and the power consumption of the electric equipment (9) within an unit time.

Apart from being provided with the charge/discharge relay (2) composed of charging/discharging circuits, the present invention is additionally configured with the control module (5) to form an unidirectional circuit that only enables discharging, thereby enabling the charge/discharge relay (2) to execute protection against overcharging, as well as opening the control module (5) and when disconnected. The storage battery unit (1) supplies power to the electric equipment (9) to prevent a power shortage phenomenon from occurring while the motor vehicle is traveling, thereby increasing the reliability of continuous operation of the electric equipment (9), as well as safety of the motor vehicle while raveling.

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A secondary lithium battery for vehicle use, wherein the secondary lithium battery for vehicle use is a starter battery, comprising a storage battery unit, a charge/discharge relay, a microprocessor, a control module, and an electrode terminal module, wherein the storage battery unit is primarily structured from a plurality of series/parallel connected battery cells, the electrode terminal module comprises a positive terminal and a negative terminal, thereby enabling electric power to pass through the electrode terminal module and enter/exit the secondary lithium battery, the charge/discharge relay is electrically connected to the storage battery unit, and the charge/discharge relay is further electrically connected to the electrode terminal module, an AC/DC (alternating current/direct current) conversion module of the electric generator of the motor vehicle and electric equipment of the motor vehicle are respectively coupled to the electrode terminal module, thereby enabling controlling charging/discharging of the storage battery unit, the microprocessor is respectively electrically connected to the storage battery unit and the charge/discharge relay, the microprocessor comprises a charging circuit and a discharging circuit, and is used to detect the voltage of the storage battery unit, as well as controlling activation of the charge/discharge relay;
and is **characterized in that**:
the storage battery unit and the microprocessor are respectively electrically connected to the control module, the control module is further electrically connected to the electrode terminal module, the microprocessor controls opening and closing the control module, thereby enabling the control module to control the storage battery unit to discharge electricity to the electric equipment.

2. An operating procedure of the secondary lithium battery for vehicle use as described in claim 1, wherein the secondary lithium battery for vehicle use comprises the storage battery unit, the charge/discharge relay, the microprocessor, the control module, and the electrode terminal module, wherein the storage battery unit is primarily structured from a plurality of series/parallel connected battery cells, the electrode terminal module comprises a positive terminal and a negative terminal, thereby enabling electric power to pass through the electrode terminal module and enter/exit the secondary lithium battery, the charge/discharge relay is electrically connected to the storage battery unit, and the charge/discharge relay is further electrically connected to the electrode terminal module, an AC/DC (alternating current/direct current) conversion module of the electric generator of the motor vehicle and electric equipment of the motor vehicle are respectively coupled to the electrode terminal module, thereby enabling controlling charging/discharging of the storage battery unit, the microprocessor is respectively electrically connected to the storage battery unit and the charge/discharge relay, the microprocessor comprises a charging circuit and a discharging circuit, and is used to detect the voltage of the storage battery unit, as well as controlling activation of the charge/discharge relay;
the storage battery unit and the microprocessor are respectively electrically connected to the control module, and the control module is further electrically connected to the electrode terminal module, the microprocessor controls opening and closing the control module, thereby enabling the control module to control the storage battery unit to discharge electricity to the electric equipment;
and is **characterized in that**:
when the storage battery unit is charging, the control module is disconnected, and the microprocessor detects the voltage of the storage battery unit, when the storage battery unit is fully charged, the microprocessor controls disconnection of the charge/discharge relay and opens the control module, thereby enabling the storage battery unit to use the control module to discharge electricity to the electric equipment;
after disconnection of the charge/discharge relay and opening the control module, the microprocessor detects the voltage of the storage battery unit, if the voltage of the storage battery unit is higher than or
equal to a third voltage value, then disconnection of the charge/discharge relay is maintained, and the control module remains open, thereby disabling the storage battery unit from being charged; if the voltage of the storage battery unit is lower than the third voltage value, then the microprocessor controls opening the charge/discharge relay, and further disconnects the control module, thereby enabling the storage battery unit to use the charge/discharge relay to supply power to the electric equipment.
